# EUROPEAN PATENT APPLICATION

(11) **EP 3 195 729 A1**
(43) Date of publication of application: **26.07.2017**
(21) Application number: 15842731.0
(22) Date of filing: 11.06.2015
(51) Int. Cl.: A21D 13/06

(54) **BREADMAKING PRODUCT FREE OF GLUTEN AND LACTOSE, AND PRODUCTION METHOD**

(30) Priority: 19.09.2014 ES 201431360
(71) Applicant: Fernandez, Louis, 17003 Girona (ES)
(72) Inventor: Fernandez, Louis, 17003 Girona (ES)
(74) Representative: ZBM Patents - Zea, Barlocci & Markvardsen
(86) International application number: PCT/ES2015/070458
(87) International publication number: WO 2016/042178

(57) **Abstract**

A breadmaking product free of gluten and lactose, and a production method, said product consisting of a main dough with: water; tapioca starch; rice flour; com starch; sunflower oil; egg white; enzymatically active soy flour; fresh yeast; dextrose; salt; hydroxypropyl methylcellulose; psyllium husk fiber; xanthan gum; and a mother dough with: whole millet flour and/or sorghum flour; amaranth flour; salt; and bacteria; said breadmaking product being fermented for 16 hours at 28 °C and matured for 24 hours at 5 °C. It is produced by mixing water, the mother dough, the oil, and the egg white in a mixer for five minutes at a speed of 45 rpm, then with the rest of the ingredients for three minutes at 45 rpm, and then with the yeast for five minutes at 90 rpm. The breads are shaped and left to ferment at 24 °C and 90% humidity, and then are baked at 180 °C and cooled at (to) 8°C.

## Description

### Object of the invention

The invention, as set forth in the present patent document, relates to a breadmaking product free of gluten and lactose, with innovative characteristics of composition, and to a method of production, with innovative characteristics of production, which characteristics will be described in detail herein, and which propose a significant novelty for the market.

More particularly, the object of the invention is focused on a breadmaking product which, being completely free of ingredients which contain gluten or lactose, and therefore being suitable for people allergic to such foodstuffs, has the taste, appearance and storage properties of a "traditional" bread such as that sold in loaves, baguettes, small roundish loaves ("lingotes"), and other forms.

### Field of application

The technical field of application of the present invention is principally the technology of breadmaking, particularly in the technology of foodstuffs which are free of gluten and lactose, and methods of production of same.

### Prior art

Currently in the bread industry, and in the food industry in general, there is great concern for persons afflicted with allergy to or intolerance of gluten and lactose; such persons represent more than 1% of the world population, and their numbers are increasing at a rate of more than 15% annually.

The product presently sold as "gluten-free bread" is not similar to traditional bread, and is sold in a packaged form, protected with an inert gas, saturated with artificial preservatives, mainly in large supermarkets, medium sized grocery stores, specialized stores, and nutritional supplements stores ("parapharmacies").

However, the main technical problem encountered currently with products designated "gluten-free bread" lies in their gustatory and organoleptic qualities, which may be described as being far removed from the taste and texture of "authentic" or "traditional bread, causing an uneasy feeling when chewed, and having the flavor of rubber.

The reason for this gustatory deficiency is no doubt attributable to the fact that the current products were developed by chemists or food technologists, and not by true breadmaking professionals (artisans of breadmaking).

The essential object of the present invention was therefore to devise a food product comprised of a specific set of natural products, correctly combined according to a determined formula, both qualitative and quantitative, and produced by a method which allows the final product to resemble traditional bread and to be marketed in ordinary bread sales channels, so as to be able to offer to the market a gluten-free bread which resembles traditional bread in its gustatory and organoleptic characteristics, as well as in its texture and appearance, and at a cost, moreover, which is clearly lower than the industrial gluten free products which currently exist.

### Description of the invention

Concretely stated, the present invention proposes (as indicated above) a new breadmaking product which is "traditional" but is free of gluten and lactose, and further proposes a method of producing said product, which method is preferred for sale of the product in the form of loaves, baguettes, or small roundish loaves, without hermetic packaging.

More specifically, the proposed product, which in known fashion contemplates prior preparation of a mother dough, comprises the following ingredients, in the indicated percentages:
For the mother dough:

| | |
|---|---|
| Whole millet flour, and/or sorghum flour | 46.00% |
| Water | 40.50% |
| Amaranth flour | 12.00% |
| Salt | 1.20% |
| Homofermentative lactic bacteria | 0.30% |

---
For the main dough:

| | |
|---|---|
| Water | 33:25% |
| Tapioca starch | 30.00% |
| Rice flour | 11.00% |
| Cornstarch | 8.50% |
| Mother dough | 5.00% |
| Sunflower oil | 2.50% |
| Egg white | 2.00% |
| Enzymatically active soy flour | 2.00% |
| Fresh yeast | 2.00% |
| Dextrose | 1.50% |
| Salt | 1.00% |
| Hydroxypropyl methylcellulose | 0.50% |
| Psyllium husk fiber | 0.50% |
| Xanthan gum | 0.25% |

---

The inventive method of producing the inventive product contemplates the following steps:
For the prior preparation of the mother dough:
   -- Mixing the dry ingredients (flours, salt, and bacteria);
   -- Incorporation of the water, at a temperature between 35 and 40 °C;
   -- Mixing;
   -- Fermenting 16 hours at 28 °C;
   -- Maturation 24 hours at 5 °C.
For preparation of the main dough:
   -- Dosing of the ingredients;
   -- Mixing of the water, the mother dough, the oil, and the egg white, in a mixer, for 5 minutes, at a speed of 45 rpm (revolutions per minute);
   -- Pre-mixing and incorporation of the other ingredients in the formula;
   -- Mixing for 3 minutes, at a speed of 45 rpm;
   -- Incorporation of the yeast;
   -- Mixing for 5 minutes, at a speed of 90 rpm;
   -- Dosing, and formation of the dough in the desired size and shape;
   -- Fermentation at 24 °C and 90% relative humidity;
   -- Baking at 180 °C in an oven having "mixed heating system" (radiation and convection);
   -- Cooling to a temperature of 8 °C;
   -- Packaging in a film material which is biodegradable and compostable;
   -- Storage at a temperature of 5 °C, prior to distribution.

Depending on the shape and weight in which the dough has been prepared, the times of fermentation, baking, and cooling vary as follows:
For breads of the type of "SMALL ROUNDISH LOAVES" ("lingotes"), which have a semi-rounded shape, with dimensions of length 16 cm, width 11 cm, and height 7 cm, and weight 330 grams:
   -- Fermentation 120 minutes;
   -- Baking 24 minutes;
   -- Cooling of the loaves for 75 minutes.

For loaves of the type of "SMALL BAGUETTES " ("baguetinas"), each of which comprises a small loaf (or roll) with cuts on the top and with pointed ends or corners, weighing 90 grams:
-- Fermentation 60 minutes;
-- Baking 10 minutes;
-- Cooling of the small baguettes for 40 minutes.

It is noted that the inventive product is preferably produced in the described form of "SMALL ROUNDISH LOAVES" ("lingotes"), each having the weight and measurements which have been specified above and which confer on it the appearance of authentic traditional bread. Fermented and baked in a wood mold or in a polymer composite mold with waxed paper, the SMALL ROUNDISH LOAVES form may incorporate various variations to suit different tastes, which may involve use of whole flour, or the incorporation of additional ingredients, such as:
-- Natural ingredients;
-- Whole ingredients (e.g. whole grain);
-- Multigrain ingredients;
-- Provençal-type ingredients;
-- Olives.

However, other bread forms may also be suitable, such as the aforementioned SMALL BAGUETTES ("baguetinas"), which undergo their fermentation and baking phases in aluminum trays with a ceramic-based coating and may also have different variants for purpose of flavor:
-- Natural ingredients;
-- Whole ingredients (e.g. whole grain);
-- Multigrain ingredients.

In any event, the inventive product will be sold with a shelf life (useful life) of 15 days without artificial preservatives for maintaining its freshness, which will allow it to be sold in bakeries, traditional stores, and collective stores and the like.

The inventive product is distinguished in that it is similar to traditional bread, without differences in appearance, touch, or taste; this is in contrast to existing products of the types which are free of gluten and lactose.

This novel product has a dual advantage, in that it is a food which is free of both gluten and lactose, and is thus suitable for people with allergies and intolerance to both of those products.

Further, it is noteworthy that the presence in the formula of essential amino acids, minerals, and fibers provides the final product with clear dietary advantages.

Finally, this bread can be distributed in the classic networks, i.e. in particular in bakeries, as long as the applicable sanitary standards are observed in the preparation of the product.

The nature of the present invention and the manner of bringing the invention into practice have been described sufficiently above; however, it should be understood that the invention may be realized in other embodiments which differ in details from the examples presented, without departing from the essential scope of the invention, which embodiments will be entitled to the protection which is sought, provided that the fundamental principles of the invention are not altered, changed, or modified.

## Claims

1. A breadmaking product free of gluten and lactose; **characterized in that** it is comprised of the following ingredients:
For the main dough:
-- Water;
-- Tapioca starch;
-- Rice flour;
-- Cornstarch;
-- Mother dough;
-- Sunflower oil;
-- Egg white;
-- Enzymatically active soy flour;
-- Fresh yeast;
-- Dextrose;
-- Salt;
-- Hydroxypropyl methylcellulose;
-- Psyllium husk fiber;
-- Xanthan gum;
wherein the mother dough is comprised of the following:
-- Whole millet flour, and/or sorghum flour;
-- Water;
-- Amaranth flour;
-- Salt;
-- Homofermentative lactic bacteria.

2. The breadmaking product free of gluten and lactose according to claim 1; **characterized in that** the ingredients are incorporated in the following percentages:
For the main dough:
| | |
|---|---|
| Water | 33:25% |
| Tapioca starch | 30.00% |
| Rice flour | 11.00% |
| Cornstarch | 8.50% |
| Mother dough | 5.00% |
| Sunflower oil | 2.50% |
| Egg white | 2.00% |
| Enzymatically active soy flour | 2.00% |
| Fresh yeast | 2.00% |
| Dextrose | 1.50% |
| Salt | 1.00% |
| Hydroxypropyl methylcellulose | 0.50% |
| Psyllium husk fiber | 0.50% |
| Xanthan gum | 0.25%. |

3. The breadmaking product free of gluten and lactose according to claim 2; **characterized in that** the ingredients of the mother dough are incorporated in the following percentages:
| | |
|---|---|
| Whole millet flour, and/or sorghum flour | 46.00% |
| Water | 40.50% |
| Amaranth flour | 12.00% |
| Salt | 1.20% |
| Homofermentative lactic bacteria | 0.30%. |

4. A production method for a breadmaking product which product is described in claims 1 to 3; **characterized in that** the method contemplates the following steps:
For the prior preparation of the mother dough:
-- Mixing the dry ingredients (flours, salt, and bacteria);
-- Incorporation of the water, at a temperature between 35 and 40 °C;
-- Mixing;
-- Fermenting 16 hours at 28 °C
-- Maturation 24 hours at 5 °C
For preparation of the main dough:
-- Dosing of the ingredients;
-- Mixing of the water, the mother dough, the oil, and the egg white, in a mixer, for 5 minutes, at a speed of 45 rpm (revolutions per minute);
-- Pre-mixing and incorporation of the other ingredients in the formula;
-- Mixing for 3 minutes, at a speed of 45 rpm;
-- Incorporation of the yeast;
-- Mixing for 5 minutes, at a speed of 90 rpm;
-- Dosing, and formation of the dough in the desired size and shape;
-- Fermentation at 24 °C and 90% relative humidity;
-- Baking at 180 °C in an oven having "mixed heating system" (radiation and convection);
-- Cooling to a temperature of 8 °C;
-- Packaging in a film material which is biodegradable and compostable;
-- Storage at a temperature of 5 °C, prior to distribution.

5. The production method according to claim 4; **characterized in that** the dough is formulated, and is formed into bread articles which have a semi-round shape, with dimensions of length 16 cm, width 11 cm, and height 7 cm, and with a weight of 330 g; and **in that** the fermentation phase occupies 120 minutes, the baking phase occupies 24 minutes, and the cooling phase occupies 75 minutes.

6. The production method according to claim 4; **characterized in that** the dough is formulated, and is formed into bread articles which have the shape of a small loaf or roll ("barrita") having cuts on the top and having pointed ends or corners, weighing 90 grams; and **in that** the fermentation phase occupies 60 minutes, the baking phase occupies 10 minutes, and the cooling phase occupies 40 minutes.
